# EUROPEAN PATENT APPLICATION

(11) **EP 2 496 002 A1**
(43) Date of publication of application: **05.09.2012**
(21) Application number: 10826023.3
(22) Date of filing: 10.09.2010
(51) Int. Cl.: H04W 12/08, H04W 12/00

(54) **ACCESS METHOD AND EQUIPMENT**

(30) Priority: 28.10.2009 CN 200910208775
(71) Applicant: ZTE Corporation, Shenzhen, Guangdong 518057 (CN)
(72) Inventor: ZHOU, Xingyue, Guangdong 518057 (CN); ZHU, Chunhui, Guangdong 518057 (CN)
(74) Representative: Vossius & Partner
(86) International application number: PCT/CN2010/076813
(87) International publication number: WO 2011/050660

(57) **Abstract**

An access method and an access device are provided in the invention, and the method includes the step of: an Authentication, Authorization and Accounting (AAA) server sending indication information to a Wireless Local Area Network Access Network (WLAN AN), wherein the indication information is used for indicating that the WLAN AN determines the direct accessing by a user equipment to the Internet without passing through an Evolved Packet Core (EPC) network. The user experience can be improved by the invention.

## Description

### Field of the Invention

The invention relates to communication field, and in particular to an access method and an access device.

### Background of the Invention

Generally speaking, User Equipments (UE) need to access the following wireless core networks by a Wireless Local Area Network Access Network (WLAN AN): the Evolved Packet Core (EPC) network, the interactive Wireless Local Area Network (WLAN), the Worldwide Interoperability for Microwave Access (WiMAX) network and the Code Division Multi-Access Access Network (CDMAAN).

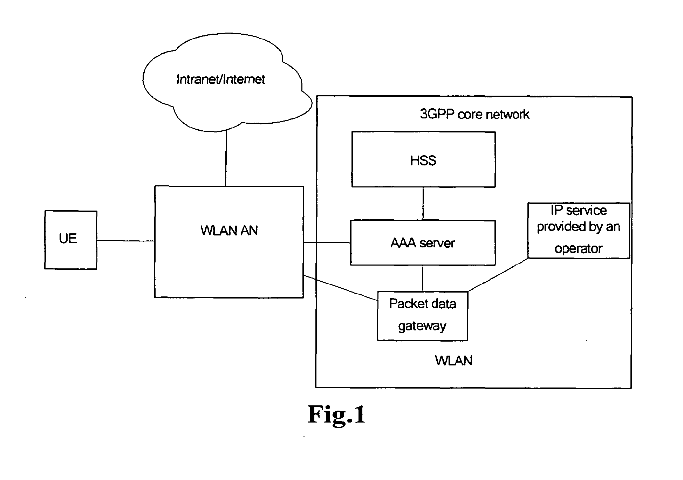

Fig. 1 is a schematic structural diagram in which the non-Third Generation Partnership Project (3GPP) network accesses the Interworking Wireless Local Area Network (I-WLAN) according to the related art, wherein the I-WLAN is the WLAN network that interacts with the 3GPP network. The interaction purpose is to facilitate the WLAN access technology to cooperate with the infrastructure of the General Packet Radio Service (GPRS) core network, so the UEs of the WLAN can access the GPRS packet service by the WLAN. As shown in the Fig. 1, the I-WLAN core network, a UE, the WLAN AN and the IP service provided by an operator are included. The I-WLAN core network further includes a Packet Data Gateway (PDG), a 3GPP Authentication, Authorization and Accounting Server (3GPP AAA Server), and a Home Subscriber Server (HSS), wherein the HSS stores the user data and generates vectors for the authentication during the user access authentication process.

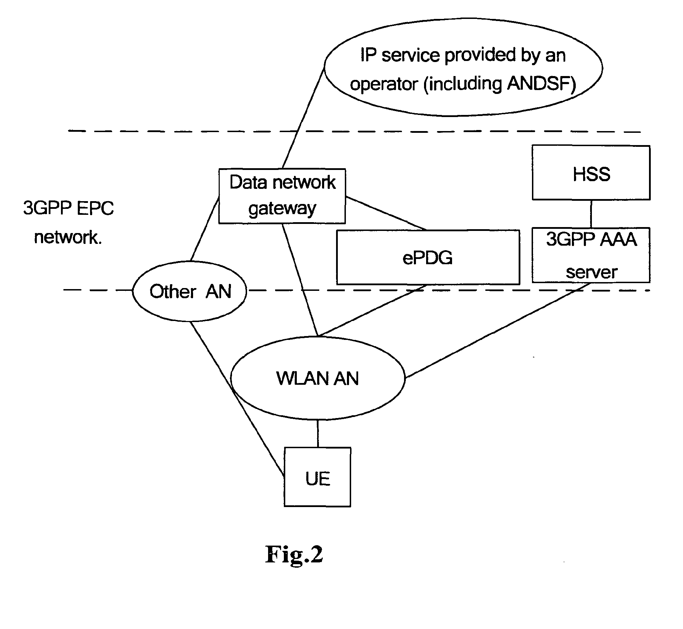

Fig. 2 is a schematic structural diagram in which the non-3GPP network - accesses the Evolved Packet Core (EPC) network according to the related art. As shown in the Fig. 2, the EPC includes an Evolved Packet Data Gateway (ePDG), a Packet Data Network Gateway (P-GW), a 3GPP AAA server, and a HSS, wherein the HSS stores the user data and generates vectors for the authentication during the user access authentication process.

In the Fig. 2, the EPC may be intercommunicated with the non-3GPP network, and the P-GW is the border gateway of both the EPC and the Packet Data Network (PDN), which is responsible for the access of the PDN, the data forwarding between the EPC and the PDN and so on. When an operator considers that the WLAN network is dependable, the WLAN AN can be directly connected with the P-GW; and when the operator considers that the WLAN AN is undependable, the WLAN AN needs to be connected with the ePDG. Therefore, the security and confidentiality of the data transmission between the UE and the ePDG can be ensured by the method. In addition, the UE can access the EPC by other access networks including 3GPP access network.

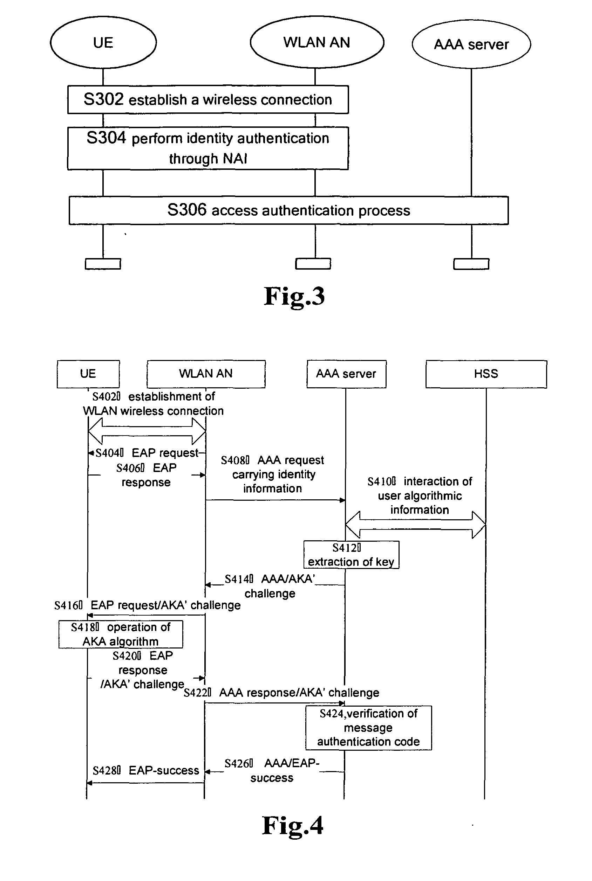

Fig. 3 is a flow chart of performing the interaction of the access authentication when a UE accesses the WLAN AN according to the related art. As shown in the Fig. 3, steps from Step S302 to Step S306 as follows are included.

Step S302, the UE establishes a WLAN wireless connection.

Step S304, the WLAN AN sends an Extensible Authentication Protocol (EAP) request/identity to the UE to ask for the UE to provide the identity for the network; and the UE, after receiving the EAP request/identity, sends the corresponding identity included in an EAP response message to the WLAN AN.

Step S306, the access authentication process, such as the algorithm key negotiation between the UE and an AAA server is performed.

However, in the related art, the user equipment may access the internet/other packet data network through the WLAN network directly or through the EPC network when connecting to the WLAN access. However, the operator is not able to control in which way the user equipment access the internet/other packet data network, so when the third application and the Internet access requests increase, the core network pressure of the operator increases; and thereby the users cannot use enough bandwidth to access the Internet.

### Summary of the Invention

Aiming at the problem that the operator cannot control whether the Third Generation Partnership Project (3GPP) core network of the operator is passed through when the UE accesses the Internet through the Wireless Local Area Network (WLAN), an access method and an access device are provided to solve the problem by the invention.

In order to achieve the purpose, according to one aspect of the invention, an access method is provided. The access method comprises: an Authentication, Authorization and Accounting (AAA) server sending indication information to a Wireless Local Area Network Access Network (WLAN AN), wherein the indication information is used for indicating that the WLAN AN determines the direct accessing by a User Equipment (UE) to Internet without passing through an Evolved Packet Core (EPC) network.

Preferably, the AAA server sending the indication information to the WLAN AN comprises the steps of: the AAA server carrying the indication information in a Diameter message according to a preset policy configuration; and the AAA server sending the Diameter message to the WLAN AN.

Preferably, after the step of the AAA server sending the Diameter message to the WLAN AN, the method further comprising the steps of: the WLAN AN receiving the Diameter message from the AAA server; and the WLAN AN determining that the UE directly accesses the Internet according to the Diameter message.

Preferably, the step of the WLAN AN determining that the UE directly accesses the Internet according to the Diameter message comprises the steps of: the WLAN AN analyzing the Diameter message; the WLAN AN extracting the indication information from the successfully analyzed Diameter message; and the WLAN AN determining that the UE directly accesses the Internet according to the indication information.

Preferably, the Diameter message further comprises: Extensible Authentication Protocol (EAP) success message.

Preferably, after the step of the WLAN AN extracting the indication information from the successfully analyzed Diameter message, the method further comprising the step of: the WLAN AN sending the EAP success message to the UE.

Preferably, the AAA server carrying the indication information in the message comprises that: the AAA server carries the indication information by utilizing the extendable field Vendor-Specific-Application-ld AVP reserved in the Diameter message.

In order to realize the purpose, according to the other aspect of the invention, an access device is provided. The access device comprises: a sending module, configured to send indication information to a WLAN AN, wherein the indication information is used for indicating that the WLAN AN determines a UE directly accesses the Internet without passing through an EPC network.

Preferably, the sending module comprises: a carrying sub-module, configured to carry the indication information in a Diameter message according to a preset policy configuration; and a sending sub-module, configured to send the Diameter message to the WLAN AN.

In the invention, the AAA server is used to send the indication information for determining that the UE directly accesses the Internet through the WLAN without passing through the 3GPP core network to the WLAN AN, so the problem that the operator cannot control whether the 3GPP core network of the operator is passed through when the UE accesses the Internet through the WLAN is solved, and thereby the users can obtain enough bandwidth to access the Internet, which can improve the user experience.

### Brief description of the Drawings

The drawings illustrated below are used for further understanding the invention and constitute a portion of the application. The exemplary embodiments of the invention and the specification thereof are used for illustrating the invention, without unduly limiting the scope of the present invention, wherein:
Fig. 1 is schematic structural diagram in which the non-Third Generation Partnership Project (3GPP) network accesses the Interworking Wireless Local Area Network (I-WLAN) according to the related art;
Fig. 2 is schematic structural diagram in which the non-3GPP network accesses the Evolved Packet Core (EPC) network according to the related art;
Fig. 3 is a flow chart of performing the interaction of the access authentication when a UE accesses the WLAN AN according to the related art;
Fig. 4 is an interaction flow chart of an access method according to one embodiment of the invention; and
Fig. 5 is a structural block diagram of an access device according to one embodiment of the invention.

### Detailed Description of Embodiments

The invention is further described below with reference to the drawings and embodiments in detail. It needs to be explained that the embodiments in the invention and the characteristics in the embodiments can be combined mutually in case of no conflict.

In the following embodiments, according to the problem that the operator cannot control whether the Third Generation Partnership Project (3GPP) core network of the operator is passed through when the UE accesses the Internet through the Wireless Local Area Network (WLAN) in the related art, an access method is provided. In the method, an Authentication, Authorization and Accounting (AAA) server is used to send the indication information for indicating that the User Equipment (UE) directly accesses the Internet through the WLAN without passing through the 3GPP core network to the WLAN Access Network (AN), so that the users can obtain enough bandwidth to access the Internet, and thereby the user experience is improved.

Preferably, the AAA server can sends the indication information to the WLAN AN according to a policy configuration, wherein the indication information is for indicating that the WLAN AN determines the direct accessing by the user equipment to the Internet without passing through the Evolved Packet Core (EPC) network.

Preferably, the AAA server can carry the indication information in a Diameter message according to a preset policy configuration (that is to say, package the indication information into the Diameter message); and the AAA server sends the Diameter message to the WLAN AN. It needs to be explained that the indication information also can be carried in the messages of other types; and as long as the indication information can be sent to the WLAN AN, the same technical effect also can be achieved.

Preferably, after the WLAN AN receives the indication information, the Internet can be directly accessed according to the indication of the indication information. Certainly, a little change can be made for the specific application, for example, the WLAN AN may have the independent option for whether to access the Internet directly. Although, such process may weaken the control force of the operator, but such processing way may increase the control means with respect to the related art and add the choice opportunities of the WLAN AN.

If the indication information is carried in the Diameter message, the WLAN AN receives the Diameter message from the AAA server and determines that the UE directly accesses the Internet. For example, the WLAN AN analyzes the Diameter message, extracts the indication information from the successfully analyzed Diameter message, and determines that the UE directly accesses the Internet by the indication information.

Preferably, after the WLAN AN extracts the indication information from the successfully analyzed Diameter message, the WLAN AN can sends an extendable authentication protocol success message to the UE, wherein the extendable authentication protocol success message is carried in the Diameter message that is sent from the AAA server to the WLAN AN.

Preferably, the AAA server can carry the indication information by utilizing the extendable field Vendor-Specific-Application-Id AVP reserved in the message.

The preferred embodiments below combined with the above preferred implementation are illustrated as follows.

Fig. 4 is an interaction flow chart of an access method according to one embodiment of the invention. As shown in the Fig. 4, the steps from Step S402 to Step S428 as follows are included.

Step S402, a UE establishes a WLAN wireless connection.

Step S404, the WLAN AN establishes a wireless connection with the UE; and the WLAN AN sends an Extensible Authentication Protocol Request/Identity (EAP Request/Identity) to the UE to request the UE to provide the identity to the network for the access authentication.

Step S406, after receiving the EAP Request/Identity, the UE sends the corresponding identity included in an EAP reply information (i.e., EAP response message) to the WLAN AN.

Step S408, the WLAN AN carries the received access type and AN identification in an AAA message (for example, the Diameter message), and sends the AAA message regarded as the authentication request to the AAA server.

Step S410, the AAA server and the HSS interact the EAP-AKA' algorithm authentication information and perform the user algorithm authentication.

Step S412, the AAA server extracts the key information.

Step S414, the AAA server sends the AAA message of the AAA/AKA' challenge message including the message authentication code to the WLAN AN and performs the algorithm negotiation.

Step S416, the WLAN AN sends an EAP request/AKA' challenge message including the message authentication code to the UE.

Step S418, the UE, after receiving the EAP/AKA' message, runs the AKA algorithm to generate the key relevant information.

Step S420, the UE packages the AKA calculation result into the EAP and sends an EAP response message to the WLAN.

Step S422, the WLAN AN packages the received EAP response message that includes the algorithm negotiation information into the Diameter message and forwards the Diameter message to the AAA server.

Step S424, the AAA server checks the received message authentication code information, and performs the processes such as the algorithm information verification.

Step S426, the AAA server directly packages the indication information for indicating the direct access to the Internet into the Diameter message including the EAP-Success message and sends the Diameter message to the WLAN AN according to a policy configuration, wherein the indication can be carried by the extendable field Vendor-Specific-Application-Id AVP reserved in the Diameter message.

Step S428, the WLAN AN receives and analyzes the Diameter message including the EAP-Success message, extracts the indication of the Internet connection way and forwards the EAP-Success message to the UE.

In above embodiment, an access method is provided to solve the problem that the operator cannot control whether the 3GPP core network of operator is passed through when it accesses the Internet through the WLAN in the related art. The AAA server is used to send the indication information for determining that the UE directly accesses the Internet to the WLAN AN so that the user can obtain enough bandwidth to access the Internet and the user experience is also improved.

It needs to be explained that the steps shown in the flow charts of the draws can be performed in a computer system with a group of computer executable instructions. The logic sequence is shown in the flow chart, but the shown or described steps can be carried out in the sequence different from that mentioned above in some cases.

According to the embodiment of the invention, an access device capable of realizing the access method is also provided. The device includes a sending module 51 for sending the indication information to the WLN AN.

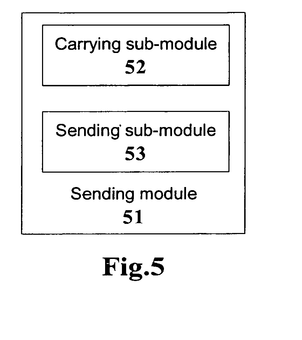

Fig. 5 is a structural block diagram of an access device according to one embodiment of the invention. As shown in the Fig. 5, the sending module 51 comprises a carrying sub-module 52 and a sending sub-module 53. A description below is made for the above structure.

The carrying sub-module 52 is configured to carry the indication information in the Diameter message according to the preset policy configuration; the sending sub-module 53, connected to the carrying sub-module 52, is configured to send the Diameter message in which the indication information is carried by the carrying sub-module 52.

It needs to be explained that the access device corresponds to the preferred embodiments; and what has been illustrated above will not be repeated again here.

In conclusion, according to the embodiments of the invention, an access method and an access device are provided. The AAA server is used to send the indication information for determining that the UE directly accesses the Internet to the WLAN AN, that is to say, the AAA server sends an indication to inform the WLAN AN of the direct access to the Internet during the authentication process of the UE accessing the WLAN, so the operator can timely control the flow path for accessing the network of the user according to certain rules (possibly but not limited to the operator policy or the subscriber data), that is to say, control whether the user accesses the Internet through the 3GPP core network. By adopting the proposal, when the flow of the 3GPP core network is over-high, a portion of flow can be directly guided to the Internet so as to weaken the pressure of the operator core network. Therefore, the users can obtain enough bandwidth to access the Internet, and the user experience is also improved.

Obviously, those skilled in the art should know that all the modules or all the steps of the invention can be realized by using a universal calculating device, can be integrated in single calculating device or distributed on a network that is composed of multiple calculating devices. Alternatively, the modules or the steps can be realized by the executable program code of the calculating device; therefore, they can be stored in a storage device to be performed by the calculating device; or they are realized by respectively making them into the integrated circuit modules or making several of them into single integrated circuit module. Thus, the invention is not limited to the combination of any specific hardware and software.

The above is only the preferred embodiments of the invention and not intended to limit the invention. For those skilled in the art, the invention can be changed and modified variously. Any modifications, equivalent substitutions, improvements and the like within the spirit and principle of the invention shall fall within the scope of protection of the invention.

## Claims

1. An access method, **characterized by** comprising the step of:
an Authentication, Authorization and Accounting (AAA) server sending indication information to a Wireless Local Area Network Access Network (WLAN AN), wherein the indication information is used for indicating that the WLAN AN determines the direct accessing by a User Equipment (UE) to Internet without passing through an Evolved Packet Core (EPC) network.

2. The method according to Claim 1, **characterized in that** the AAA server sending the indication information to the WLAN AN comprises the steps of:
the AAA server carrying the indication information in a Diameter message according to a preset policy configuration; and
the AAA server sending the Diameter message to the WLAN AN.

3. The method according to Claim 2, **characterized in that** after the step of the AAA server sending the Diameter message to the WLAN AN, the method further comprising the steps of:
the WLAN AN receiving the Diameter message from the AAA server; and
the WLAN AN determining that the UE directly accesses the Internet according to the Diameter message.

4. The method according to Claim 3, **characterized in that** the step of the WLAN AN determining that the UE directly accesses the Internet according to the Diameter message comprises the steps of:
the WLAN AN analyzing the Diameter message;
the WLAN AN extracting the indication information from the successfully analyzed Diameter message; and
the WLAN AN determining that the UE directly accesses the Internet according to the indication information.

5. The method according to any one of Claims 2 to 4, **characterized in that** the Diameter message further comprises: Extensible Authentication Protocol (EAP) success message.

6. The method according to Claim 5, **characterized in that** after the step of the WLAN AN extracting the indication information from the successfully analyzed Diameter message, the method further comprising the step of:
the WLAN AN sending the EAP success message to the UE.

7. The method according to any one of Claims 1 to 6, **characterized in that** the AAA server carrying the indication information in the message comprises that:
the AAA server carries the indication information by utilizing the extendable field Vendor-Specific-Application-ld AVP reserved in the Diameter message.

8. An access device, **characterized by** comprising:
a sending module, configured to send indication information to a WLAN AN, wherein the indication information is used for indicating that the WLAN AN determines a UE directly accesses the Internet without passing through an EPC network.

9. The device according to Claim 8, **characterized in that** the sending module comprises:
a carrying sub-module, configured to carry the indication information in a Diameter message according to a preset policy configuration; and
a sending sub-module, configured to send the Diameter message to the WLAN AN.
